# EUROPÄISCHE PATENTSCHRIFT

(11) **EP 4 473 645 B1**
(45) Veröffentlichungstag und Bekanntmachung des Hinweises auf die Patenterteilung: **11.11.2026**
(21) Anmeldenummer: 23714720.2
(22) Anmeldetag: 26.03.2023
(51) Int. Cl.: H02K 49/04

(54) **WIRBELSTROM-BREMSE FÜR LINEARE ANTRIEBE**
EDDY CURRENT BRAKE FOR LINEAR DRIVES
FREIN À COURANT DE FOUCAULT POUR ENTRAÎNEMENTS LINÉAIRES

(30) Priorität: 07.04.2022 CH 3922022
(43) Veröffentlichungstag der Anmeldung: 11.12.2024
(73) Patentinhaber: Integral Drive Systems AG, 8807 Freienbach (CH)
(72) Erfinder: STOEV, Alexander, 8853 Lachen (CH)
(74) Vertreter: Felber, Josef
(86) Internationale Anmeldenummer: PCT/EP2023/057748
(87) Internationale Veröffentlichungsnummer: WO 2023/194133

(56) Entgegenhaltungen:
- CN-A- 105 591 523
- DE-B- 1 053 687
- US-A- 4 482 034
- US-A1- 2008 105 503

## Beschreibung

Wirbelstrom-Bremsen (WBS) für lineare Antriebe werden für Linearantriebe in den Kabinen von Achterbahnen oder in sogenannten Freifall-Türmen eingesetzt. Die WBS bremsen die Fahrzeuge am Ende der Fahrt fehlersicher ab, wie etwa im Gebrauchsmuster DE 295 06 374 U1 beschrieben wird.

Eine Wirbelstrom-Bremse WBS besteht aus einem kurzen, axial bewegten Läufer mit Magneten und aus stationär befestigen massiven Bremsplatten, welche zwischen den Magneten eingebaut sind.

Die massiven Bremsplatten erschweren die Beschleunigung der Kabinen am Anfang einer neuen Bahnfahrt. Die Bremsplatten werden deswegen aus dem Raum zwischen den Magneten ausgefahren. Die mechanischen Vorrichtungen, welche die massiven Bremsplatten ausfahren, sind aufwendig und kostspielig. In dieser Schrift wird ein neues Verfahren vorgestellt, welches erlaubt, die Bremskraft einer WSB zu verändern, ohne die Bremsplatte ein- oder auszufahren.

### Stand der Technik

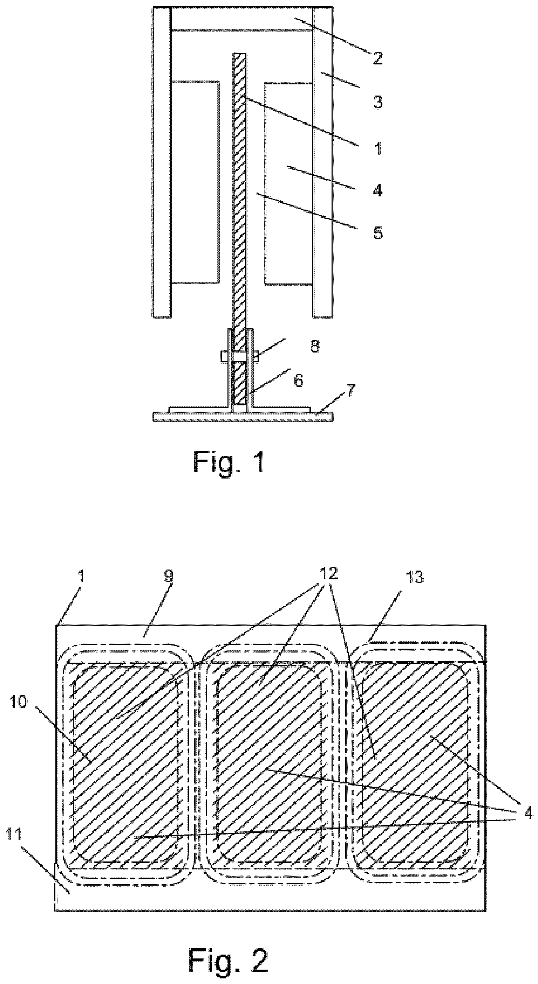

Figur 1 zeigt die Frontansicht einer Wirbelstrombremse für Linearantriebe nach dem Stand der Technik.

Die Wirbelstrom-Bremse WBS besteht aus einer Bremsplatte 1, aus einem U-förmigen Läufer 2 mit den beiden Magnetleisten 3, welche die Magnete 4 tragen, dem Induktionsraum 5 zwischen den Magneten, und den winkelförmigen Befestigungsprofilen 6, welche die Bremsplatte 1 auf einer stationären Plattform 7 fixieren. Der Läufer 2 bewegt sich entlang einer Bewegungsachse (Linearachse). Die drei Dimensionen der Bremsplatte 1 werden in Bezug auf die Linearachse (Bewegungsachse) des Läufers wie folgt definiert:

Die Länge der Bremsplatte 1 ist in die axiale Richtung (entlang der Linearachse, linear, das heisst hier senkrecht zur Zeichnungsblatt-Ebene) ausgerichtet, die Höhe der Bremsplatte 1 ist in transversaler Richtung (transversal, das heisst in der Zeichnungsblatt-Ebene von unten nach oben) ausgerichtet, die Breite (Dicke) der Bremsplatte 1 ist in die Querrichtung (quer, das heisst in der Zeichnungsblatt-Ebene horizontal von links nach rechts) ausgerichtet.

Die Magnete sind durch die Magnetbreite bₘ, durch die Magnethöhe hₘ und durch die Magnetinduktion Bₘ definiert. Die Magnetfläche ist gleich dem Produkt bₘ * hₘ. Die Magnete sind entlang der Magnetleiste 3, also in der Figur 1 in der Zeichnungsblatt-Ebene von unten nach oben, alternierend magnetisiert. Die gegenüber angeordneten Magnete 4 sind gleich polarisiert, die Induktionen der gegenüber liegenden Magnete 4 summieren sich im Induktionsraum.

Eine Bremsplatte besteht meistens aus einer Kupfer-Legierung, ist ca. 6 mm dick, ca. 40 cm hoch und ca. 60 cm lang. Die Bremsplatte 1 nach dem Stand der Technik ist massiv ausgeführt.

Die Figur 2 zeigt eine Seitenfläche einer massiven Bremsplatte 1, in welcher je drei Magnetflächen 12 und Wirbelströme 13 eingezeichnet sind. Die Bremsplatte 1 ist funktionell in einen Induktionsbereich 10, in einen Leiterbereich 9 und in einen Profilbereich 11 aufgeteilt.

Die schraffierte Fläche 13 entspricht einer Magnetfläche, welche durch die Induktion Bₘ der Magnete durchflutet ist. Die bewegten Magnete induzieren ringförmige Wirbelströme 13, welche die Magnetflächen 12 einschliessen und den Läufer abbremsen.

Die ringförmigen Wirbelströme 13 werden im Induktionsbereich 10 angeregt, und vom Leiterbereich 9 und Profilbereich 11 kurzgeschlossen. Für die Bremskraft F_{ws} und für die Wirbelströme der massiven Bremsplatte I_{ws} gilt in erster Näherung die Gleichung (1): ${F}_{ws} ∼ {I}_{ws} ∼ {B}_{m} ∗ {{b}_{m}}^{2} ∗ {h}_{m}$ (1)

Die Bremskraft F_{ws} und die Wirbelströme I_{ws} einer massiven Bremsplatte 1 sind proportional der Magnetinduktion Bₘ, dem Quadrat der Breite bₘ² und der Höhe hₘ der Magneten.

Die bestehenden technischen Lösungen nutzen die Abhängigkeit der Bremskraft von der Magnetinduktion Bₘ - siehe Gleichung (1).

Das Verfahren gemäss der Patentschrift EP 3 451 516 A1 schlägt vor, eine Magnetleiste des Läufers axial um eine Magnetbreite bₘ zu verschieben.

Die Induktionen der Magnete, welche gegenüber im Induktionsraum liegen, sind nach der Verschiebung der Magnetleiste nicht mehr gleichgesetzt, sondern entgegengesetzt. Die Induktionen der Magnete im Induktionsraum löschen sich gegenseitig, die Bremskraft sinkt. Wenn die Magnetleiste um die Magnetbreite bₘ zurückverschoben wird, steigt die Induktion Bₘ im Induktionsraum und die Bremskraft der Wirbelstrombremse WBS.

Im Patent US 4,482,034 wird vorgeschlagen, einen Teil der Magnetpole zu verdrehen und damit deren Bremswirkung zu modulieren. In der Auslegeschrift DE 1 053 687 des Deutsches Patentamtes wird eine lineare Verschiebung der Magnete vorgeschlagen, ähnlich wie nach der Patentschrift EP 3 451 516 A1. In der Schrift CN 105591523A werden rotierende Scheiben abgebremst, indem das Magnetfeld der Magnetpole mit dem Magnetfeld von stromdurchflossenen Spulen überlagert wird. Durch die Änderung der Stromrichtung der Spulen wird der Magnetfluss und somit die Bremswirkung der Pole verstärkt oder verringert bzw. ausgeschaltet. In einem anderen Verfahren wird die Bremskraft durch das Einfahren bzw. Ausfahren der Bremsplatte aus dem Induktionsraum verändert. Wenn die massive Bremsplatte sich ausserhalb des Induktionsraums befindet, ist keine Bremskraft vorhanden. Je weiter die Bremsplatte in den Induktionsraum eingetaucht wird, desto grösser wird die Bremskraft der massiven Bremsplatte.

Der Druckspeicher und die Ventile sind so konfiguriert, dass im Fehlerfall die Bremsplatten in den Induktionsraum eingefahren werden, so dass die volle Bremskraft im Fehlerfall vorhanden ist (fehlersichere WBS). Die im Fehlerfall benötigte Energie wird von einem Druckspeicher geliefert.

Das Dokument US2008105503 beschreibt ein verwandtes Verfahren.

Im Folgenden wird dieser oben aufgeführte Stand der Technik kritisch bewertet: Die Vorrichtung, welche die Magnetleiste verschiebt (EP 3 451 516 A1, US 4,482,034) ist wegen der starken Anziehungskräfte zwischen den Magnetleisten aufwendig und kostspielig. Darüber hinaus benötigt diese Vorrichtung Energie im Fahrzeug, welche in der Kabine einer Achterband nicht vorhanden ist. Deswegen hat sich dieses Verfahren nicht durchgesetzt.

Die Steuerung der Bremswirkung der Magnetpole durch stromdurchflossene Spulen ist problematisch, da die Spulen sehr gross ausfallen und der Spulenstrom Verluste und hohe Temperaturen verursacht. Darüber hinaus ist dieses Verfahren nur für rotierende Wirbelstrombremsen gedacht. Die Vorrichtung für das Ein- und Ausfahren der Bremsplatten besteht aus pneumatischen bzw. hydraulisch betriebenen Zylindern mit Druckspeichern. Diese Vorrichtung muss die volle Bremskraft absorbieren können und ist deswegen aufwendig, voluminös und kostspielig.

Diese Kritik gilt auch für den Druckspeicher, der als Energiequelle für das Eintauchen der Bremsplatte in den Induktionsraum benötigt wird.

### Aufgabe der Erfindung

Eingedenk dieser Nachteile der bekannten Konstruktionen ist es die Aufgabe der vorliegenden Erfindung, ein Verfahren für die Steuerung der Bremskraft einer WSB zu etablieren, welches ohne die kostspielige Verschiebung der Bremsplatten auskommt.

Eine weitere Aufgabe besteht darin, Vorrichtungen anzugeben, wie sie für die Umsetzung diese Verfahrens benötigt werden. Eine weitere Aufgabe besteht darin, ein Verhältnis von mindestens neun zu eins zwischen der maximalen und der minimalen Bremskraft der gesteuerten WSB zu erreichen. Eine weitere Aufgabe besteht darin, die Vorrichtung so kompakt zu gestalten, dass möglich wird, eine bestehende WSB mit einer erfindungsgemäss gesteuerten WSB zu ersetzen.

Diese Vorrichtungen sollen Kurzschlüsse zwischen den Segmenten einer S-Bremsplatte erzeugen bzw. diese Kurzschlüsse aufheben. Eine weitere Aufgabe der Erfindung besteht darin, die Eigenschaften und die Topologie der Bremsplatten der gesteuerten WBS zu definieren.

Die Vorrichtung für die Steuerung der Bremskraft soll Ströme im Bereich von einigen 1000 A ein- und ausschalten, der Widerstand der Kurzschlüsse soll dabei nur einige Milli-Ohm betragen. Es sollen dabei hohe Verluste und unzulässig hohe Temperaturen vermieden werden.

Die Vorrichtung soll wenn möglich bis zu 10⁵ Schaltvorgänge ohne einen Ausfall bewältigen können. Sie muss ausserdem fehlersicher sein, d.h. im Fehlerfall muss die maximale Bremskraft erzeugt werden.

### Lösung gemäss Erfindung

Die Lösung der technischen Aufgabe besteht in einem Verfahren nach den Merkmalen der Patentanspruche 1 bis 3. Das Verfahren ist umsetzbar mit Vorrichtungen nach den Ansprüchen 4 bis 14. Die massive Bremsplatte wird erfindungsgemäss also in Segmente aufgeteilt. Diese Segmente werden entweder kurzgeschlossen, um eine grosse Bremskraft zu erreichen, oder die Kurzschlüsse werden geöffnet, um die Bremskraft zu verkleinern. Die Topologie der segmentierten Bremsplatte und die benötigten Vorrichtungen für die Erzeugung und für die Aufhebung der Kurzschlüsse zwischen den Segmenten der Bremsplatte werden im Folgenden vorgestellt.

Anhand der Figuren wird die Grundproblematik aufgezeigt und die Vorrichtungen für die Umsetzung des Verfahrens werden dargestellt. Nachfolgend werden diese beschrieben und erklärt.
Es zeigt:
- Figur 1:: Frontansicht einer Wirbelstrom-Bremse für Linearantriebe nach dem Stand der Technik;
- Figur 2:: Massive Bremsplatte mit drei Wirbelströmen nach dem Stand der Technik;
- Figur 3:: Segmentierte Bremsplatte mit offenen Segmenten;
- Figur 4:: Segmentierte Bremsplatte mit kurzgeschlossenen Kurzschlussflächen;
- Figur 5:: Der Aufbau eines Schalters;
- Figur 6:: Kontaktleiter mit Federkontakten;
- Figur 7:: Kontaktleiter mit Steckkontakten.

Das Ziel dieser Erfindung wird durch die Aufteilung eines Bereiches der elektrisch leitenden Bremsplatte in mehrere isolierte Segmente erreicht. Die segmentierte Bremsplatte wird im Weiteren als S-Bremsplatte bezeichnet. Die Segmentierung erfolgt durch den Einbau von Schlitzen in der massiven Bremsplatte. Die Schlitze isolieren die elektrisch leitende Segmente voneinander - im Weiteren offene Segmente genannt.

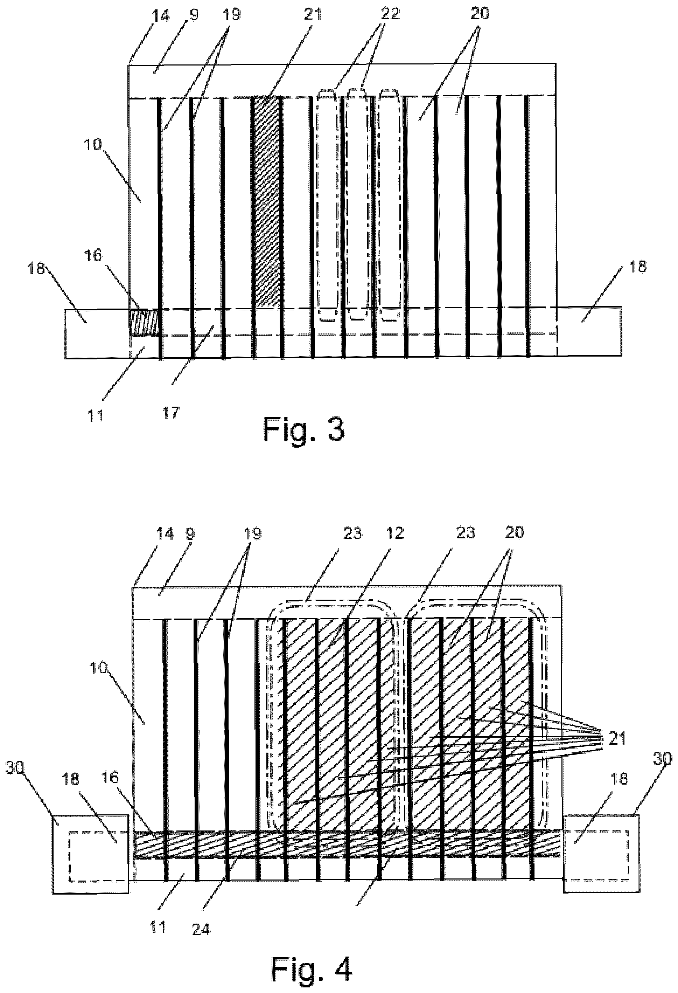

Die Figur 3 zeigt eine segmentierte Bremsplatte mit offenen Segmenten 20. Die S-Bremsplatte 14 ist funktional in einen Profilbereich 11, in einen Induktionsbereich 10 und in einen Leiterbereich 9 aufgeteilt. Die Höhe des Induktionsbereiches 10 ist gleich oder grösser als die Magnethöhe hₘ.

Der Kontaktbereich 17 der S-Bremsplatte 14, welcher sich zwischen dem Induktionsbereich 10 und dem Profilbereich 9 befindet, ist in einzelne Segmente aufgeteilt. Die Kontaktfläche16 eines Segmentes in mit der schraffierten Fläche 16 in der Figur 3 dargestellt. Die beiden Stellerbereiche 18 sind für die Befestigung von Stellern vorgesehen.

Die Schlitze 19 verlaufen vorzugsweise transversal durch den Induktionsbereich 10, durch den Kontaktbereich 17 und durch den Profilbereich 11. Nur der Leiterbereich 9 ist nicht segmentiert. Die Schlitze definieren voneinander isolierte Segmente 20 mit der Segmentbreite bₛ. Der Induktionsbereich 10 der S-Bremsplatte wird von der Magnetinduktion erfasst.

Der Kontaktbereich 17 der S-Bremsplatte 14 kann keine Wirbelströme kurzschliessen, da dieser Bereich durch Schlitze 19 unterbrochen ist. Die Wirbelströme 22 können sich nur innerhalb der Segmente 20 schliessen. Die Wirbelströme 22 umschliessen demzufolge nur die jeweils aktiven Segmentflächen 21, welche in der Fig. 3 schraffiert dargestellt sind. Die Bremskraft F_{ws1} und die Wirbelströme I_{ws1} einer S-Bremsplatte 14 mit offenen Segmenten 20 sind proportional dem Quadrat der Segmentbreite bₛ. Es gilt: ${F}_{ws 1} ∼ {I}_{ws 1} ∼ {B}_{m} ∗ {{b}_{s}}^{2} ∗ {h}_{m}$ (2)

Je grösser die Anzahl der offenen Segmente 20 ist, desto kleiner sind die Segmentbreiten, die Wirbelströme und die Bremskraft.

Die Breite der Schlitze 19 einer S-Bremsplatte 14 liegt im Millimeter-Bereich, denn die maximale Spannung zwischen zwei Schlitzen ist kleiner 50 V. Die Schlitze 19 sind vorzugsweise mit einem Isolator gefüllt, um Verunreinigungen fernzuhalten.

Eine massive Bremsplatte mit den Abmessungen einer S-Bremsplatte 14 wird als äquivalente Bremsplatte bezeichnet. Die Bremskraft einer S-Bremsplatte 14 mit offenen Segmenten 20 kann auf weniger als 10% der Bremskraft der äquivalenten Bremsplatte reduziert werden.

Die Voraussetzung für eine minimale Bremskraft wird erfüllt, wenn der Leiterbereich 9 der S-Bremsplatte 14 nicht von dem Streufluss der Magnete des Läufers erfasst wird und keine Wirbelströme angeregt werden. Diese Forderung wird mit einem Induktionsbereich erreicht, welcher höher als die Magnete ist.

Figur 4 zeigt den schraffiert dargestellten Kontaktbereich 24 einer segmentierte Bremsplatte 14 mit kurzgeschlossenen Segmenten 20. Erfindungsgemäss ist die Bremskraft einer S-Bremsplatte 14 grösser, wenn die Segmente 20 kurzgeschlossen sind. Der Kurzschluss der Segmente 20 findet im Kontaktbereich 24 statt.

Die Wirbelströme 23 einer S-Bremsplatte 14 mit kurzgeschlossenen Segmenten 20 umschliessen die Magnetflächen 12, welche in der Figur 4 schraffiert gezeigt sind. Die Verläufe der Wirbelströme I_{ws2} 23 einer S-Bremsplatte 14 mit kurzgeschlossenen Segmenten 20 sind vergleichbar mit den Verläufen der Wirbelströme I_{ws} 13 einer massiven Bremsplatte, welche in der Figur 2 dargestellt sind.

Für die Wirbelströme I_{ws2} und für die Bremskraft F_{ws2} einer S-Bremsplatte 14 mit kurzgeschlossenen Segmenten 20 gilt die Gleichung (3) welche äquivalent der Gleichung (1) ist: ${F}_{ws 2} ∼ {I}_{ws 2} ∼ {B}_{m} ∗ {{b}_{m}}^{2} ∗ {h}_{m}$ (3)

Daraus folgt, dass die Bremskraft der S-Bremsplatte 14 mit kurzgeschlossenen Segmenten 20 bis zu 90% der Bremskraft einer äquivalenten Bremsplatte erreichen kann.

Im Weiteren werden die Vorrichtungen beschrieben, welche geeignet sind, das oben beschriebene Verfahren anzuwenden.

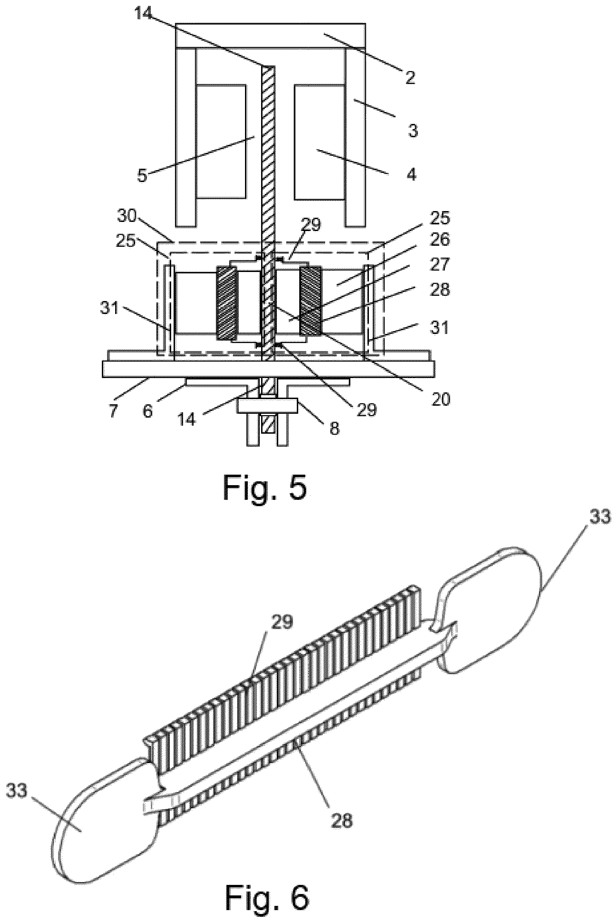

Eine Vorrichtung zur Durchführung des Verfahrens nach den Ansprüchen 1 bis 3 besteht aus zwei Schaltern 30 welche mit den beiden Stellerbereichen 18 der S-Bremsplatte 14 mechanisch verbunden sind, wie in Figur 4 schematisch gezeigt. Ein Schalter 30 beinhaltet zwei Stellerpaare 25, wie diese in Figur 5 eingezeichnet sind.

Ein Stellerpaar 25 besteht aus einem EIN-Steller 26 und einem AUS-Steller 27, welche einen Kontaktleiter 28 mit Federkontakten 29 bewegen. Der AUS-Steller 27 befördert den Kontaktleiter 28 mit Federkontakten in eine AUS-Position, der EIN-Steller 26 befördert den Kontaktleiter 28 mit den Federkontakten in eine EIN-Position.

Die Segmente 20 einer S-Bremsplatte 14 werden von den beiden Kontaktleitern 28 mit den Federkontakten 29 kurzgeschlossen. Zwei EIN-Steller 26 und zwei AUS-Steller 27, welche an den Stellerbereichen 18 der S-Bremsplatte 14 befestigt sind, bewegen die beiden Kontaktleiter 28 mit den Federkontakten 29, wie in Figur 5 dargestellt.

Wenn die beiden EIN-Steller 26 einer S-Bremsplatte 14 die beiden Kontaktleiter 28 in die EIN-Position befördern, werden die Federkontakte 29 an beiden Kontaktbereichen der S-Bremsplatte14 anpresst und schliessen die Segmente dieser S-Bremsplatte 14 kurz. Dieser Zustand wird EIN-Zustand genannt. Die Segmente 20 sind im diesem Zustand kurzgeschlossen, wie in Figur 5 dargestellt.

Wenn die beiden AUS-Steller 27 einer S-Bremsplatte 14 die beiden Kontaktleiter 28 in die AUS-Position befördern, werden die Verbindungen zwischen den Federkontakten 29 und den Segmenten 20 unterbrochen. Die Kurzschlüsse der Segmente 20 werden damit geöffnet. Dieser Zustand wird AUS-Zustand genannt, die Segmente 20 sind im AUS-Zustand geöffnet. Die EIN- und AUS-Schalter einer S-Bremsplatte 14 werden synchron gesteuert.

Wie in Figur 5 dargestellt, fixiert ein Gehäuse 31 fixiert die Stellerpaare 25 der S-Bremsplatte 14 an der stationären Plattform 7. Die S-Bremsplatte 16 ist mit den Befestigungsschrauben 8 an den Befestigungsprofilen 6 befestigt. Die Befestigungsprofile 6 fixieren die S-Bremsplatte 14 an der Plattform 8.

Die Befestigungsprofile 6 und die Befestigungsschrauben 8 sind von der S-Bremsplatte 14 isoliert. Dadurch wird ausgeschlossen, dass die Befestigungsprofile 6 die Segmente 20 der S-Bremsplatte 14 kurzschliessen.

Figur 6 zeigt den Aufbau eines Kontakteiters 28, welcher mit mehreren einzeln gefederten Kontakten 29 verbunden ist. Der Kontakteiter 28 ist an seinen beiden Enden mit je einem Stellerbereich 33 für die Befestigung von Stellern ausgestattet. Der Kontaktleiter 28 ist aus einem gut leitenden Metall (z.B. Kupfer) gefertigt. Die Federkontakte 29 sind aus einer gut leitenden Federlegierung (z.B. Bronze) gefertigt.

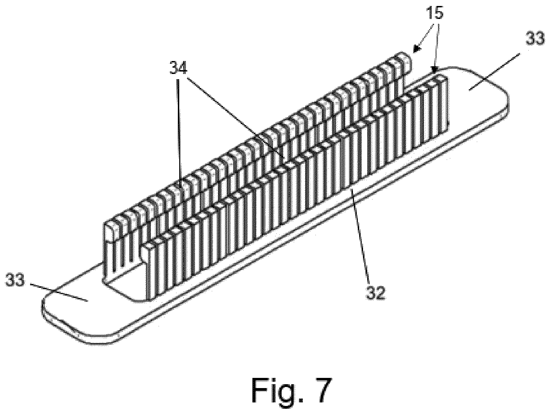

Figur 7 zeigt eine Ausführung eines Kontaktleiters 32 mit zwei Reihen von einzeln gefederten Steckkontakten 34 mit zwei Stellerbereichen 33, vorgesehen für die Befestigung der Steller. Eine S-Bremsplatte ist dann zwischen den Steckkontakten 34 eingeklemmt.

Die Kontaktflächen der Segmente der S-Bremsplatte sind beim Einsatz in den Kontaktleiter mit seinen Steckkontakten 34 in leitende und isolierte Kontaktflächen aufgeteilt. Die isolierten Kontaktflächen sind mit einer Isolationsschicht belegt.

Im AUS-Zustand kontaktieren die Steckkontakte 34 nur die isolierten Kontaktflächen, die Segmente bleiben voneinander isoliert. Im EIN-Zustand kontaktieren die Steckkontakte 34 die leitenden Kontaktflächen der Segmente und schliessen diese kurz.

Die beiden EIN-Steller schieben die Steckkontakte 34 zu den leitenden Kontaktflächen der Segmente, die AUS-Steller schieben die Steckkontakte 34 zu den isolierten Kontaktflächen der Segmente.

Die Federkontakte 29, die Steckkontakte 34 und die Kontaktflächen der Segmente 16 sind mit einem Kontaktmaterial beschichtet. Die Schlitze zwischen den Feder- 29 und Steckkontakten 34 sind mit einem Isolator gefüllt. Die Schlitze 19 der S-Bremsplatte sind mit einem Isolator gefüllt, um leitende Verschmutzungen fernzuhalten. Die EIN- und AUS-Steller können mit mechatronischen, pneumatischen, hydraulischen Stellantrieben bzw. mit pneumatischen oder hydraulischen Zylindern für deren Betätigung realisiert werden. Die Steller sind vorzugsweise mit pneumatischen oder hydraulischen Zylindern für ihre Bewegung ausgeführt.

Der Druckspeicher und die Ventile für den Betrieb der hydraulischen bzw. pneumatischen EIN- und AUS-Steller sind so konfiguriert, dass im Fehlerfall die Segmente der S-Bremsplatte kurzgeschlossen sind.

Die EIN-Steller des fehlersicheren Schalters können mit einer oder mehreren Zugfedern ersetzt oder erweitert werden. Im Fehlerfall werden die AUS-Steller deaktiviert, und die Zugfeder bewegt die Kontaktleiter selbsttätig in die EIN-Position.

Die AUS-Steller des Schalters können mit einer oder mehreren Druckfedern ersetzt oder erweitert werden, die EIN-Steller bleiben erhalten.

Die beiden Kontaktleiter einer S-Bremsplatte werden synchron in die EIN- oder in die AUS-Position befördert.

Es sind Positionssensoren vorgesehen, welche melden, dass die Kontaktleiter die EIN-Position oder die AUS-Position erreicht haben. Temperatursensoren registrieren und melden weiter, wenn die Temperatur der Feder- oder Steck-Kontakte einen maximalen Wert erreicht hat. Dadurch wird das Verschweissen der Feder- oder Steck-Kontakte mit den Segmenten vermieden.

### Ziffernverzeichnis

- 1: Bremsplatte
- 2: Läufer
- 3: Magnetleiste
- 4: Magnete
- 5: Induktionsraum
- 6: Befestigungsprofile
- 7: Plattform
- 8: Befestigungsschrauben
- 9: Leiterbereich
- 10: Induktionsbereich
- 11: Befestigungsbereich
- 12: Magnetflächen
- 13: Wirbelströme
- 14: S-Bremsplatte
- 15: -
- 16: Kontaktfläche eines Segmentes 20
- 17: Kontaktbereich
- 18: Stellerbereiche
- 19: Schlitze zwischen den Segmenten 20

- 20: Segemente
- 21: Segementflächen
- 22: Wirbelströme in den Segmenten 20
- 23: Wirbelströme um die Magnetflächen
- 24: Kontaktbereich
- 25: Stellerpaar
- 26: EIN-Steller
- 27: AUS-Steller
- 28: Kontaktleiter
- 29: Federkontakt
- 30: Schalter
- 31: Gehäuse
- 32: Kontaktleiter mit zwei Reihen von einzeln gefederten Steckkontakten 15
- 33: Stellerbereiche
- 34: Steckkontakte

## Patentansprüche

1. Verfahren für die Steuerung der Bremskraft einer linearen Wirbelstrombremse (WBS), die aus mindestens einer Bremsplatte (14) und aus mindestens einem bewegten Läufer (2) mit Magneten (4) besteht, deren Magnetflächen (12) Induktionen in der Bremsplatte (14) erzeugen und Wirbelströme (13) um die Magnetflächen induzieren,
***dadurch gekennzeichnet,***
**dass** durch Schlitze (19) in der Bremsplatte (14) diese segmentiert und unterteilt ist in voneinander isolierte, offene Segmente (20), welche die Bremskraft der Wirbelstrom-Bremse (WBS) gegenüber einer durchgehenden Bremsplatte verringern, und diese offenen Segmente (20) bedarfsweise mittels Stellerpaaren (25) aus je einem EIN-Steller (26) und einem AUS-Steller (27), mit denen ein Kontaktleiter (28) in eine EIN-Position oder in eine AUS-Position beförderbar ist, elektrisch verbunden bzw. kurzgeschlossen werden, um die Bremskraft der WBS zu vergrössern.

2. Verfahren nach Anspruch 1,
***dadurch gekennzeichnet,***
**dass** die Wirbelströme (22) der segmentierten Bremsplatte (14), das heisst der sogenannten S-Bremsplatte (14) nur in den jeweils offenen Segmenten (20) und in einem Leiterbereich (9) fliessen, welcher die offenen Segmente (20) einseitig verbindet, wenn sich die Kontaktleiter (28) in der AUS-Position befinden.

3. Verfahren nach Anspruch 1 oder 2,
***dadurch gekennzeichnet,***
**dass** die Wirbelströme (22) nur in jenen S-Bremsplatten (14) mit kurzgeschlossenen Segmenten (20) die Magnetflächen (12) der S-Bremsplatten (14) umschliessen, wenn sich die Kontaktleiter (28) in der EIN-Position befinden.

4. Vorrichtung zur Durchführung des Verfahrens nach einem der Ansprüche 1 bis 3, als lineare Wirbelstrombremse (WBS) aus mindestens einer segmentierten Bremsplatte (14), d.h. einer sogenannten S-Bremsplatte (14), und aus mindestens einem bewegten Läufer (2) mit Magneten (4), deren Magnetflächen (12) Induktionen in der S-Bremsplatte (14) erzeugen und Wirbelströme (13) um die Magnetflächen induzieren,
***dadurch gekennzeichnet,***
**dass** die S-Bremsplatte (14) funktionell in einen Befestigungsbereich (11), in einen Kontaktbereich (17), in einen Induktionsbereich (10) und in einen Leiterbereich (9) aufgeteilt ist, und die Bereiche der S-Bremsplatte (14) mit Ausnahme des Leiterbereiches (9) durch transversal verlaufende Schlitze (19) in mehrere Segmente (20) aufgeteilt sind, die bedarfsweise kurzschliessbar sind.

5. Vorrichtung nach Anspruch 4, ***dadurch gekennzeichnet,***
**dass** für das bedarfsweise Kurzschliessen der Segmente (20) Schalter (30) vorhanden sind mit je zwei Stellerpaaren (25), wobei je ein Stellerpaar (25) linksseitig bzw. rechtsseitig der S-Bremsplatte (14) angeordnet ist, und jedes Stellerpaar (25) aus einem EIN-Steller (26) und aus einem AUS-Steller (27) besteht, und mit jedem Stellerpaar (25) ein Kontaktleiter (28) in eine EIN-Position oder in eine AUS-Position beförderbar ist, und Federkontakte (29) der Kontaktleiter (28), welche sich in der EIN-Position befinden, die Kontaktflächen der Segmente (20) kontaktieren und die Segmente (20) kurzschliessen, und die Federkontakte (29) der Kontaktleiter (28), welche sich in der AUS-Position befinden, durch einen Luftspalt von den Kontaktflächen der Segmente (20) isoliert sind und die Segmente (20) somit nicht kurzschliessen.

6. Vorrichtung nach einem der Ansprüche 4 bis 5,
***dadurch gekennzeichnet,***
**dass** Befestigungsprofile (6) für die S-Bremsplatte (14) vorhanden sind, die mit Befestigungsschrauben (8) an den Befestigungsprofilen (6) befestigt ist, wobei die Befestigungsprofile (6) und die Befestigungsschrauben (8) von der S-Bremsplatte (14) isoliert sind.

7. Vorrichtung zumindest nach Anspruch 5,
***dadurch gekennzeichnet,***
**dass** der Kontaktleiter (28) aus einem elektrisch leitenden Material besteht, die mit dem Kontaktleiter (28) elektrisch verbundenen Federkontakte (29) aus einer elektrisch leitenden Feder-Legierung bestehen, und Stellerbereiche (18) an beiden Enden der S-Bremsplatte (14) gebildet sind, die mit den Stellern (26, 27) verbunden sind.

8. Vorrichtung zumindest nach Anspruch 5,
***dadurch gekennzeichnet,***
**dass** ein Kontaktleiter (32) zwei Reihen von einzeln gefederten Steckkontakten (15) und zwei Stellerbereiche (33) beinhaltet, wobei die S-Bremsplatte (14), zwischen den Steckkontakten (15) eingesteckt ist und die Steckkontakte (15) die Kontaktflächen der Segmente (20) der S-Bremsplatte (14) kontaktieren, wobei die Kontaktflächen der Segmente (20) in leitende und in isolierte Kontaktflächen aufgeteilt sind, und die Steckkontakte (15) in der EIN-Position die leitenden Kontaktflächen kontaktieren und die Segmente (20) der S-Bremsplatte (14) kurzschliessen, während die Steckkontakte in der AUS-Position die isolierten Kontaktflächen der Segmente (20) kontaktieren und die Segmente (20) somit nicht kurzschliessen.

9. Vorrichtung nach Anspruch 8,
***dadurch gekennzeichnet,***
**dass** die Federkontakte (29), die Steckkontakte (15) und die Kontaktflächen der Segmente (20) mit einem Kontaktmaterial beschichtet sind, und die Schlitze (19) mit einem Isolator gefüllt sind.

10. Vorrichtung zumindest nach Anspruch 5,
***dadurch gekennzeichnet,***
**dass** jeder EIN-Steller (26) sowie jeder AUS-Steller (27) einen pneumatisch oder hydraulisch gesteuerten Zylinder für seinen Antrieb einschliesst.

11. Vorrichtung zumindest nach Anspruch 5,
***dadurch gekennzeichnet,***
**dass** jeder EIN-Steller (26) mit einer oder mit mehreren Federn für seine Bewegung ausgeführt ist.

12. Vorrichtung zumindest nach Anspruch 5,
***dadurch gekennzeichnet,***
**dass** jeder AUS-Steller (27) mit einer oder mit mehreren Federn für seine Bewegung ausgeführt ist.

13. Vorrichtung zumindest nach Anspruch 5,
***dadurch gekennzeichnet,***
**dass** die Kontaktleiter (28) der S-Bremsplatte (14) synchron in den EIN- oder in den AUS-Zustand beförderbar sind, und alle Segmente (20) der S-Bremsplatte (14) synchron kurzschliessbar oder öffnenbar sind.

14. Vorrichtung zumindest nach Anspruch 5,
***dadurch gekennzeichnet,***
**dass** Positions-Sensoren vorhanden sind, mittels derer das Erreichen der EIN-Position und der AUS-Position der Kontaktleiter (28) registrierbar ist, sowie Temperatursensoren vorhanden sind, zur Erfassung der Temperatur der Federkontakte (29).

## Claims

1. A method for controlling the braking force of a linear eddy-current brake (WBS) comprising at least one brake plate (14) and at least one moving rotor (2) with magnets (4), the magnetic surfaces of which (12) generate magnetic flux in the brake plate (14) and induce eddy currents (13) around the magnetic surfaces, ***characterised in***
**that** the brake plate (14) is segmented by slots (19) and divided into mutually isolated, open segments (20), which reduce the braking force of the eddy current brake (WBS) compared with a solid brake plate, and these open segments (20) are electrically connected or short-circuited as required in order to increase the braking force of the WBS.

2. A method according to claim 1,
***characterised in***
**that** the eddy currents (22) of the segmented brake plate (14), i.e. the so-called S-brake plate (14), flow only in the respective open segments (20) and in a conductor region (9) which connects the open segments (20) on one side when the contact conductors (28) are in the OFF position.

3. A method according to claims 1 and 2,
***characterised in***
**that** the eddy currents (22) enclose the magnetic surfaces (12) of the S-brake plates (14) only in those S-brake plates (14) with short-circuited segments (20) when the contact conductors (28) are in the ON position.

4. Apparatus for carrying out the method according to any one of claims 1 to 3, in the form of a linear eddy-current brake (WBS) comprising at least one segmented brake plate (14), i.e. a so-called S-brake plate (14), and at least one moving rotor (2) with magnets (4), whose magnetic surfaces (12) generate magnetic fields in the S-brake plate (14) and induce eddy currents (13) around the magnetic surfaces,
***characterised in***
**that** the S-brake plate (14) is functionally divided into a mounting region (11), a contact region (17), an induction region (10) and a conductor region (9), and the regions of the S-brake plate (14), with the exception of the conductor region (9), are divided by transversely extending slots (19) into several segments (20) which can be short-circuited as required.

5. A device according to claim 4, ***characterised in that**,*
that, for the purpose of short-circuiting the segments as required, (20) as required, switches (30) are provided, each with two actuator pairs (25), whereby one actuator pair (25) is arranged on the left-hand side and one on the right-hand side of the S-brake plate (14), and each actuator pair (25) consists of an ON actuator (26) and an OFF actuator (27), and each actuator pair (25) can move a contact conductor (28) into an ON position or an OFF position, and spring contacts (29) of the contact conductors (28), which are in the ON position, make contact with the contact surfaces of the segments (20) and short-circuit the segments (20), and the spring contacts (29) of the contact conductors (28) which are in the OFF position are isolated from the contact surfaces of the segments (20) by an air gap and thus do not short-circuit the segments (20).

6. A device according to any one of claims 4 to 5,
***characterised in***
**that** mounting profiles (6) are provided for the S-brake plate (14), which is secured to the mounting profiles (6) by means of fixing screws (8), wherein the mounting profiles (6) are insulated from the S-brake plate (14).

7. A device according to at least claim 5,
***characterised in***
**that** the contact conductor (28) consists of an electrically conductive material, the spring contacts (29) electrically connected to the contact conductor (28) consist of an electrically conductive spring alloy, and actuator regions (18) are formed at both ends of the S-brake plate (14), which are connected to the actuators (26, 27).

8. A device according to at least claim 5,
***characterised in***
**in that** a contact conductor (32) comprises two rows of individually spring-loaded plug contacts (15) and two actuator regions (33), wherein the S-brake plate (14) is inserted between the plug contacts (15) and the plug contacts (15) make contact with the contact surfaces of the segments (20) of the S-brake plate (14), wherein the contact surfaces of the segments (20) are divided into conductive and insulated contact surfaces, and in the ON position, the plug-in contacts (15) make contact with the conductive contact surfaces and short-circuit the segments (20) of the S-brake plate (14), whilst in the OFF position, the plug-in contacts make contact with the insulated contact surfaces of the segments (20) and thus do not short-circuit the segments (20).

9. A device according to claim 8,
***characterised in***
**in that** the spring contacts (29), the plug contacts (15) and the contact surfaces of the segments (20) are coated with a contact material, and the slots (19) are filled with an insulator.

10. A device according to at least claim 5,
***characterised in***
**that** each ON actuator (26) and each OFF actuator (27) comprises a pneumatically or hydraulically controlled cylinder for its drive.

11. A device according to at least claim 5,
***characterised in***
**in that** each ON actuator (26) is designed with one or more springs to enable its movement.

12. A device according to at least claim 5,
***characterised in***
**in that** each 'OFF' actuator (27) is designed with one or more springs to drive its movement.

13. A device according to at least claim 5,
***characterised in***
**in that** the contact conductors (28) of the S-brake plate (14) can be moved synchronously into the ON or OFF state, and all segments (20) of the S-brake plate (14) can be short-circuited or opened synchronously.

14. A device according to at least claim 5,
***characterised in***
**that** position sensors are provided, by means of which the reaching of the ON position and the OFF position of the contact conductors (28) can be detected, and that temperature sensors are provided for detecting the temperature of the spring contacts (29).

## Revendications

1. Procédé de commande de la force de freinage d'un frein à courants de Foucault linéaire (WBS), composé d'au moins une plaque de frein (14) et d'au moins un rotor mobile (2) muni d'aimants (4) dont les surfaces magnétiques (12) génèrent des inductions dans la plaque de freinage (14) et induisent des courants de Foucault (13) autour des surfaces magnétiques,
***caractérisé en ce***
**que** la plaque de frein (14) est segmentée par des fentes (19) et divisée en segments ouverts isolés les uns des autres (20) isolés les uns des autres, ce qui réduit la force de freinage du frein à courants de Foucault (WBS) par rapport à une plaque de freinage continue, et que ces segments ouverts (20) sont, si nécessaire, reliés électriquement ou mis en court-circuit afin d'augmenter la force de freinage du WBS.

2. Procédé selon la revendication 1,
*caractérisé en ce*
en ce que les courants de Foucault (22) de la plaque de frein segmentée (14), c'est-à-dire de la plaque de frein dite en S (14), ne circulent que dans les segments ouverts (20) respectifs et dans une zone conductrice (9) qui relie les segments ouverts (20) d'un seul côté, lorsque les conducteurs de contact (28) se trouvent en position « OFF ».

3. Procédé selon les revendications 1 et 2,
*caractérisé en ce*
en ce que les courants de Foucault (22) n'entourent les surfaces magnétiques (12) des plaques de freinage en S (14) que dans les plaques de freinage en S (14) dont les segments (20) sont court-circuités, lorsque les conducteurs de contact (28) se trouvent en position « ON ».

4. Dispositif destiné à la mise en œuvre du procédé selon l'une des revendications 1 à 3, sous la forme d'un frein à courants de Foucault linéaire (WBS) composé d'au moins une plaque de frein segmentée (14), c'est-à-dire une plaque de frein dite en « S » (14), et d'au moins un rotor mobile (2) muni d'aimants (4), et dont les surfaces magnétiques (12) s génèrent des inductions dans la plaque de freinage en S (14) et induisent des courants de Foucault (13) autour des surfaces magnétiques,
***caractérisé en ce***
**que** la plaque de freinage en S (14) est divisée, sur le plan fonctionnel, en une zone de fixation (11), une zone de contact (17), une zone d'induction (10) et une zone conductrice (9), et que les zones de la plaque de freinage en S (14), à l'exception de la zone conductrice (9), sont divisées par des fentes transversales (19) en plusieurs segments (20) qui peuvent être court-circuités si nécessaire.

5. Dispositif selon la revendication 4, ***caractérisé en ce que**,*
que, pour court-circuiter les segments si nécessaire, (20), il existe des commutateurs (30) comportant chacun deux paires de commutateurs (25), une paire de commutateurs (25) étant disposée respectivement à gauche et à droite de la plaque de freinage en S (14), et chaque paire de commutateurs (25) étant composée d'un commutateur « MARCHE » (26) et d'un commutateur « ARRÊT » (27), et chaque paire de commutateurs (25) permet de déplacer un conducteur de contact (28) dans une position « MARCHE » ou dans une position « ARRÊT », et les contacts à ressort (29) des conducteurs de contact (28), qui se trouvent en position « MARCHE », entrent en contact avec les surfaces de contact des segments (20) et court-circuitent les segments (20), et les contacts à ressort (29) des conducteurs de contact (28) qui se trouvent en position « OFF » sont isolés des surfaces de contact des segments (20) par un entrefer et ne court-circuitent donc pas les segments (20).

6. Dispositif selon l'une des revendications 4 à 5,
*caractérisé en ce*
en ce qu'il existe des profilés de fixation (6) pour la plaque de frein en S (14), qui est fixée aux profilés de fixation (6) à l'aide de vis de fixation (8), les profilés de fixation (6) étant isolés de la plaque de frein en S (14).

7. Dispositif selon au moins la revendication 5,
*caractérisé en ce*
en ce que le conducteur de contact (28) est constitué d'un matériau électriquement conducteur, les contacts à ressort (29) reliés électriquement au conducteur de contact (28) sont constitués d'un alliage à ressort électriquement conducteur, et des zones d'actionnement (18) sont formées aux deux extrémités de la plaque de frein en S (14), lesquelles sont reliées aux actionneurs (26, 27).

8. Dispositif selon au moins la revendication 5,
***caractérisé en ce***
**qu'**un conducteur de contact (32) comprend deux rangées de contacts enfichables (15) à ressort individuels et deux zones d'actionnement (33), la plaque de frein en S (14) étant insérée entre les contacts enfichables (15) et les contacts enfichables (15) étant en contact avec les surfaces de contact des segments (20) de la plaque de freinage en S (14), les surfaces de contact des segments (20) étant réparties en surfaces de contact conductrices et isolées, et que, en position « ON », les contacts enfichables (15) entrent en contact avec les surfaces de contact conductrices et court-circuitent les segments (20) de la plaque de freinage en S (14), tandis qu'en position « OFF », les contacts enfichables entrent en contact avec les surfaces de contact isolées des segments (20) et ne court-circuitent donc pas les segments (20).

9. Dispositif selon la revendication 8,
*caractérisé en ce*
en ce que les contacts à ressort (29), les contacts enfichables (15) et les surfaces de contact des segments (20) sont recouverts d'un matériau de contact, et les fentes (19) sont remplies d'un isolant.

10. Dispositif selon au moins la revendication 5,
***caractérisé en ce***
**que** chaque actionneur « MARCHE » (26) ainsi que chaque actionneur « ARRÊT » (27) comprend un vérin à commande pneumatique ou hydraulique pour son entraînement.

11. Dispositif selon au moins la revendication 5,
*caractérisé en ce*
en ce que chaque actionneur « MARCHE » (26) est muni d'un ou de plusieurs ressorts pour assurer son mouvement.

12. Dispositif selon au moins la revendication 5,
*caractérisé en ce*
en ce que chaque actionneur « OFF » (27) est muni d'un ou de plusieurs ressorts pour assurer son mouvement.

13. Dispositif selon au moins la revendication 5,
*caractérisé en ce*
en ce que les conducteurs de contact (28) de la plaque de freinage en S (14) peuvent être amenés de manière synchrone à l'état « ON » ou à l'état « OFF », et tous les segments (20) de la plaque de freinage en S (14) peuvent être court-circuités ou ouverts de manière synchrone.

14. Dispositif selon au moins la revendication 5,
***caractérisé en ce***
**qu'**il est prévu des capteurs de position permettant de détecter l'atteinte de la position « ON » et de la position « OFF » des conducteurs de contact (28), ainsi que des capteurs de température destinés à mesurer la température des contacts à ressort (29).
